# EUROPÄISCHE PATENTSCHRIFT

(11) **EP 3 512 745 B1**
(45) Veröffentlichungstag und Bekanntmachung des Hinweises auf die Patenterteilung: **07.07.2021**
(21) Anmeldenummer: 17758831.6
(22) Anmeldetag: 17.08.2017
(51) Int. Cl.: B60T 13/66, B60T 17/22

(54) **BREMSSTEUERUNGSVORRICHTUNG UND VERFAHREN ZUR STEUERUNG EINER BREMSVORRICHTUNG EINES SCHIENENFAHRZEUGS**
BRAKE CONTROL DEVICE AND METHOD FOR CONTROLLING A BRAKING DEVICE OF A RAILWAY VEHICLE
DISPOSITIF DE COMMANDE DE FREINS ET PROCÉDÉ DE COMMANDE D'UN SYSTÈME DE FREINS D'UN VÉHICULE FERROVIAIRE

(30) Priorität: 14.09.2016 DE 102016117244
(43) Veröffentlichungstag der Anmeldung: 24.07.2019
(73) Patentinhaber: KNORR-BREMSE Systeme für Schienenfahrzeuge GmbH, 80809 München (DE)
(72) Erfinder: SCHNEIDER, Stefan, 80995 München (DE); BRÄUNLICH, Marco, 81245 München (DE); RASEL, Thomas, 85635 Höhenkirchen-Siegertsbrunn (DE); KOVACS, Kristian, 5712 Szabadkígyós (HU)
(86) Internationale Anmeldenummer: PCT/EP2017/070880
(87) Internationale Veröffentlichungsnummer: WO 2018/050391

(56) Entgegenhaltungen:
- EP-A2- 2 030 855
- WO-A1-2013/034720
- DE-A1-102009 042 965
- DE-A1-102014 107 402

## Beschreibung

Die Erfindung betrifft eine Bremssteuerungsvorrichtung zur Steuerung von Bremsen eines Schienenfahrzeugs oder von Bremsen eines Verbands mehrerer Schienenfahrzeuge, wobei die Bremssteuerungsvorrichtung so gestaltet ist, dass sie die Bremsen des Schienenfahrzeugs oder des Verbands mehrerer Schienenfahrzeuge achsweise oder drehgestellweise ansteuern kann. Die Erfindung betrifft des Weiteren ein Verfahren zur Steuerung von Bremsen eines Schienenfahrzeugs oder von Bremsen eines Verbands mehrerer Schienenfahrzeuge.

Beim Aufbau bzw. Abbau von Bremskräften eines Schienenfahrzeugs dürfen in der Regel Grenzwerte für die Änderungsgeschwindigkeit der Verzögerung eines Fahrzeugs, d.h. für die zeitliche Ableitung der Beschleunigung bzw. der Verzögerung (auch als Ruck bezeichnet), nicht überschritten werden. Werden Bremskräfte achs- oder drehgestellweise beispielsweise mit schaltenden Aktuatoren, zum Beispiel mit Gleitschutzventilen, auf- bzw. abgebaut, so ergibt sich durch die Nähe dieser Aktuatoren zu den Krafterzeugern, beispielsweise zu den Bremszylindern, eine verglichen beispielsweise mit einer ungeregelten pneumatischen Bremse, die durch ein Führerbremsventil im Triebfahrzeug zentral angesteuert wird, kleinere Dämpfung des zeitlichen Verlaufs des Bremsdrucks im Krafterzeuger, da aufgrund kleiner Rohr- bzw. Leitungslängen die beispielsweise bei der ungeregelten pneumatischen Bremse durch die Leitungen vom Triebfahrzeug hin zu den einzelnen Bremsen auftretende Dämpfung entfällt.

Beim Bremsvorgang ist einerseits eine möglichst stetige Änderung der Gesamtbremskraft und damit der Verzögerung gewünscht. Andererseits soll die Menge der Schaltspiele, mittels derer eine stetige Änderung der Gesamtbremskraft erzielt werden kann, möglichst klein sein. Mit abnehmender Menge an Schaltspielen wird der Verzögerungsverlauf stufiger. Eine Glättung des Verzögerungsverlaufs erfordert hingegen eine Erhöhung der Anzahl an Schaltspielen. Der Zielkonflikt zwischen der Zahl der erforderlichen Schaltspiele, um eine möglichst stetige Änderung der Verzögerung zu erzielen, und andererseits einem stufigen Verzögerungsverlauf bei nur wenigen oder keinen Schaltspielen, verschärft sich mit höherer Kraftänderungsgeschwindigkeit am Steller, beispielsweise dem Ventil, sowie mit kleinerer Entfernung zum Krafterzeuger, beispielsweise dem Bremszylinder.

Bei herkömmlichen Bremssystemen, beispielsweise den bekannten ungeregelten Druckluftbremsen von Schienenfahrzeugen, bei denen der Kraftaufbau bzw. der Kraftabbau im Bremssystem zentral über einen Vorsteuerkreis mit Schaltventilen oder über Steuerventile erfolgt, werden die gegebenenfalls im Vorsteuerdruck vorhandenen Druckstufen durch den Übertragungsweg geglättet und kommen bei den Krafterzeugern nicht mehr an. Dadurch wird ein stetiger Verzögerungsaufbau bzw. auch ein stetiger Verzögerungsabbau beim Lösen von Bremsen erzielt.

Bei herkömmlichen Bremssystemen, bei denen die Bremskräfte hingegen achs- oder drehgestellweise erzeugt werden bzw. achs- oder drehgestellweise beeinflusst werden können, werden die Kraftänderungsgeschwindigkeiten im Rahmen einer Erst-Inbetriebnahme durch Bedüsung auf ein gewünschtes Zeitverhalten eingestellt, d.h. gedämpft, wodurch auch bei diesen Bremssystemen ein gleichmäßiger Kraftauf- bzw. Abbau erzielt wird. Dafür ist jedoch eine Bedämpfung der Stellglieder, beispielsweise der Ventile, erforderlich. Es ist einerseits eine Düsenbestimmung erforderlich, und es sind verschiedene einbauortspezifische Düsen erforderlich.

Dokument WO 2013/0347290 A1 offenbart beispielsweise eine Bremssteuereinrichtung für eine Bremsanlage eines Schienenfahrzeugs. In einer Ausführungsform kann die Bremssteuereinrichtung dazu ausgebildet sein, für Prüfbremsungen Reibbremseinrichtungen einzeln oder in Gruppen nacheinander zeitverzögert anzusteuern.

Im Dokument EP 2 030 855 B1 ist ein Schienenfahrzeug und ein Verfahren zum Prüfen der Wirksamkeit einer mechanischen Bremse des Schienenfahrzeugs offenbart. Nach einem Erreichen eines stationären Zustands einer Geschwindigkeitssteuerung des Schienenfahrzeugs werden vorzugsweise nacheinander einzeln alle mechanischen Bremsen des Schienenfahrzeugs betätigt, wobei vor und nach den Bremsungen eine Bremskraft gemessen wird.

Dokument DE 10 2014 107 402 A1 zeigt ein Schienenfahrzeugbremssystem mit einer Konditionierungseinrichtung. Durch die Konditioniereinrichtung kann eine Scheibenbremse pro Achse selektiv angesteuert werden, wobei eine nacheinander erfolgende Ansteuerung aller Achsen möglich ist.

Es ist daher die Aufgabe der vorliegenden Erfindung, eine verbesserte Bremssteuerungsvorrichtung für achs- bzw. drehgestellweise ansteuernde Bremsen bereitzustellen, mit der ein stetiger bzw. ein näherungsweise stetiger Kraftaufbau bzw. Kraftabbau im Bremssystem erzielt werden kann. Vorzugsweise soll dies möglich sein, ohne das Zeitverhalten des Bremssystems durch Bedüsung einstellen zu müssen.

Diese Aufgabe wird durch eine Bremssteuerungsvorrichtung zur Steuerung von Bremsen eines Schienenfahrzeugs oder von Bremsen eines Verbands mehrerer Schienenfahrzeuge mit den Merkmalen des Anspruchs 1 sowie durch ein Verfahren zur Steuerung von Bremsen eines Schienenfahrzeugs oder von Bremsen eines Verbands mehrerer Schienenfahrzeuge mit den Verfahrensschritten des Anspruchs 4 gelöst. Vorteilhafte Ausführungsformen der Erfindung ergeben sich aus den Unteransprüchen.

Gemäß einem Aspekt der Erfindung ist eine Bremssteuerungsvorrichtung zur Steuerung von Bremsen eines Schienenfahrzeugs oder von Bremsen eines Verbands mehrerer Schienenfahrzeuge so gestaltet, dass sie die Bremsen des Schienenfahrzeugs oder des Verbands mehrerer Schienenfahrzeuge achsweise oder drehgestellweise ansteuern kann. Die Bremssteuerungsvorrichtung ist des Weiteren so gestaltet, dass die Bremsen voneinander verschiedener Achsen oder die Bremsen voneinander verschiedener Drehgestelle bei einem Bremsvorgang sequenziell angesteuert werden.

Bei den Bremsen kann es sich beispielsweise um pneumatische oder elektrodynamische Bremsen etc. handeln, soweit für diese eine achsweise oder drehgestellweise Ansteuerung durchgeführt werden kann.

Die erfindungsgemäße Bremsvorrichtung ist so gestaltet, dass sie die Bremsen des Schienenfahrzeugs oder des Verbands mehrerer Schienenfahrzeuge achsweise oder drehgestellweise ansteuern kann. Dadurch ist es möglich, anders als beispielsweise bei herkömmlichen ungeregelten pneumatischen Bremsen, gezielt beispielsweise Ventile so anzusteuern, dass die Bremsen an den einzelnen Achsen oder die Bremsen von Drehgestellen unabhängig von den Bremsen anderer Achsen oder den Bremsen anderer Drehgestelle angesteuert werden können. Durch die Bremssteuerungsvorrichtung ist somit ein Zugriff auf die einzelnen Bremsen bzw. achsweise oder drehgestellweise gruppierte Bremsen eines Schienenfahrzeugs möglich, so dass einzelne Achsen oder einzelne Drehgestelle unabhängig von anderen Achsen oder Drehgestellen abgebremst werden können.

Durch die erfindungsgemäße Bremssteuerungsvorrichtung werden die Bremsen voneinander verschiedener Achsen oder die Bremsen voneinander verschiedener Drehgestelle bei einem Bremsvorgang sequenziell angesteuert. Dadurch ist es möglich, die Bremsen der Achsen oder Drehgestelle eines Schienenfahrzeugs oder eines gesamten Zuges als Verband von Schienenfahrzeugen nicht gleichzeitig zu betätigen, sondern die Bremsen nacheinander zu betätigen. Dadurch ist es möglich, die Bremsen voneinander verschiedener Achsen oder die Bremsen voneinander verschiedener Drehgestelle eines Schienenfahrzeugs oder eines Verbands von Schienenfahrzeugen so anzusteuern, dass die Bremskräfte an den verschiedenen Achsen nicht gleichzeitig, sondern zeitlich gestaffelt aufgebaut werden. Gleichzeitig kann selbstverständlich auch der Abbau von Bremskräften, d.h. das Lösen von Bremsen, zeitlich gestaffelt durchgeführt werden. Es ist auch möglich, an einem Teil der Bremsen Bremskräfte abzubauen, während an anderen Bremsen Bremskräfte aufgebaut werden, beispielsweise um ein Überhitzen von Bremsen zu vermeiden oder gewünschte Muster der Bremskräfte beispielsweise über die Bremsen eines Zuges zu erzielen.

Dadurch werden die Bremskräfte an den verschiedenen Achsen oder Drehgestellen eines Schienenfahrzeugs oder eines Verbands von Schienenfahrzeugen nicht gleichzeitig erzeugt, sondern nacheinander. Der Aufbau der Bremskräfte im Schienenfahrzeug bzw. im Verbund von Schienenfahrzeugen wird damit über das Schienenfahrzeug bzw. den gesamten oder Teile eines Zuges verteilt. Dadurch ergibt sich ein gleichmäßigerer Kraftaufbau bzw. -abbau der Bremskräfte gegenüber einem Bremssystem, bei dem die Bremskräfte weitgehend gleichzeitig auf- bzw. abgebaut werden.

Dadurch ist es möglich, einen geforderten gleichmäßigeren Aufbau bzw. Abbau der Bremskräfte zu erzielen, ohne Stellglieder, beispielsweise Ventile, durch individuelle Bedüsung anzupassen oder den Kraftaufbau durch eine erhöhte Zahl der Schaltspiele der Ventile stetig gestalten zu müssen. Durch Verzicht auf Bedüsung behalten die Stellglieder ihre maximale Stellgeschwindigkeit, beispielsweise für den Gleitschutzfall, bei. Eine Anpassung von Stücklisten im Anschluss an die Düsenbestimmung sowie das Vorsehen individueller Düsen als Einbauort spezifischer Elemente kann entfallen. Die Fahrzeuge können mit einheitlichen Ventilen bestückt werden. Dies bringt Vorteile bei der Logistik, der Projektierung und der Montage mit sich.

Gemäß der erfindungsgemäßen Bremssteuerungsvorrichtung ist die Bremssteuerungsvorrichtung so gestaltet, dass sie Steuerungsvorgänge mit einer Abtastzeit getaktet durchführt und die sequenzielle Ansteuerung der Bremsen verteilt innerhalb der Abtastzeit durchgeführt wird.

Die Abtastzeit bzw. das Abtastintervall ist das Zeitintervall, innerhalb dessen die Bremssteuerungsvorrichtung beispielsweise Sensorsignale einliest, Aktuatoren ansteuert und Entscheidungen über Aktionen trifft bzw. dafür notwendige Rechenvorgänge durchführt.

In der erfindungsgemäßen Bremssteuerungsvorrichtung wird die sequenzielle Ansteuerung der Bremsen verteilt innerhalb der Abtastzeit durchgeführt. Dies bedeutet, dass während eines Abtastintervalls bzw. während der Abtastzeit sämtliche Bremsen des Schienenfahrzeugs oder des Verbands mehrerer Schienenfahrzeuge angesteuert werden. Nach Ablauf der Abtastzeit sind somit sämtliche Bremsen des Schienenfahrzeugs oder des Verbandes von Schienenfahrzeugen mit dem Steuerungssignal, das durch die Berechnungen während der vorangehenden Abtastzeit ermittelt und zu Beginn der aktuellen Abtastzeit ausgegeben wurde, angesteuert. Nach Ablauf der Abtastzeit liegt ein neues Steuersignal vor, mit dem erneut sequenziell sämtliche Bremsen des Schienenfahrzeugs oder des Verbands an Schienenfahrzeugen angesteuert werden, so dass die Steueraktionen während des darauffolgenden Abtastintervalls erneut durchgeführt werden.

Dabei wird die sequenzielle Ansteuerung der Bremsen vorzugsweise gleich verteilt innerhalb der Abtastzeit durchgeführt, d.h. der zeitliche Abstand zwischen dem Ansteuern einzelner Bremsen ist jeweils gleich. Es kann jedoch auch eine beliebige andere Verteilung der Ansteuerung der Bremsen innerhalb der Abtastzeit vorgenommen werden, beispielsweise können zu Beginn der Abtastzeit in engerem zeitlichen Abstand mehrere Bremsen angesteuert werden, und gegen Ende der Abtastzeit weniger, so dass die Zunahme der Bremskraft über die Abtastzeit geringer wird, d.h. degressiv verläuft. Alternativ können zu Beginn der Abtastzeit einzelne Bremsen zunächst in einem größeren zeitlichen Abstand angesteuert werden, so dass die Bremskräfte langsam ansteigen, und im weiteren Verlauf der Abtastzeit Bremsen in zunehmend geringerem zeitlichen Abstand voneinander angesteuert werden, so dass die Bremskräfte über den Verlauf der Abtastzeit progressiv zunehmen.

In einer weiteren vorteilhaften Ausgestaltung der erfindungsgemäßen Bremssteuerungsvorrichtung ist die Bremssteuerungsvorrichtung so gestaltet, dass beim Bremsvorgang die Bremsen eines Schienenfahrzeugs mit jeweils zwei in zwei Drehgestellen angeordneten Achsen derart angesteuert werden, dass die Bremsen der einzelnen Achsen in einem zeitlichen Abstand von jeweils einem Viertel der Abtastzeit zueinander versetzt angesteuert werden.

Das betreffende Schienenfahrzeug weist somit zwei Drehgestelle auf, wie es bei Personenwaggons oder Triebköpfen bzw. Wagen von Triebzügen häufig anzutreffen ist. Jedes Drehgestell weist zwei Achsen auf, die im Drehgestell angeordnet sind. Somit weist das Schienenfahrzeug vier Achsen auf, die durch jeweils zugehörige Bremsen gebremst werden können. In der erfindungsgemäßen Bremssteuerungsvorrichtung werden die Bremsen dieser vier Achsen so angesteuert, dass die Bremsen der einzelnen Achsen in einem zeitlichen Abstand von einem Viertel der Abtastzeit zueinander versetzt angesteuert werden.

Während der Abtastzeit, mit der die Bremssteuerungsvorrichtung die Steuerungsvorgänge durchführt, werden somit alle vier Achsen des Schienenfahrzeugs nacheinander mit jeweils gleichem zeitlichen Abstand angesteuert. Da vier Achsen vorliegen, werden die einzelnen Achsen somit in einem zeitlichen Abstand von einem Viertel der Abtastzeit zueinander versetzt angesteuert. Dies ermöglicht es, den Kraftaufbau für die Bremskräfte an einem Schienenfahrzeug jeweils in kleinen Stufen zu erhöhen, so dass der Ruck durch die Bremskräfte reduziert wird und ein Aufbau der Bremskräfte des Schienenfahrzeugs erzielt wird, der einem gleichmäßigen Aufbau von Bremskräften angenähert ist. Dies betrifft ebenfalls den Abbau von Bremskräften beim Lösen der Bremsen.

In einer weiteren vorteilhaften Ausgestaltung der erfindungsgemäßen Bremssteuerungsvorrichtung ist die Bremssteuerungsvorrichtung so gestaltet, dass Steuerventile oder Vorsteuerventile einer pneumatischen Bremsvorrichtung angesteuert werden können.

Bei der Bremse des Schienenfahrzeugs handelt es sich somit um eine pneumatische, d.h. um eine Druckluftbremse. Durch die Bremssteuerungsvorrichtung werden dabei die Steuerventile oder bei Vorsteuerung die Vorsteuerventile der pneumatischen Bremsvorrichtung angesteuert. Das Erzeugen von Bremskräften erfolgt bei pneumatischen Bremsvorrichtungen durch pneumatische Bremszylinder, deren Belüften und deren Entlüften durch die Steuerventile bzw. bei Vorsteuerung zum Beispiel durch Relais-Ventile erfolgt. Alternativ können durch die erfindungsgemäße Bremssteuerungsvorrichtung auch andere Bremsarten, beispielsweise elektrodynamische Bremsen, angesteuert werden.

In einem erfindungsgemäßen Verfahren zur Steuerung von Bremsen eines Schienenfahrzeugs oder von Bremsen eines Verbands mehrerer Schienenfahrzeuge werden die Bremsen voneinander verschiedener Achsen oder die Bremsen voneinander verschiedener Drehgestelle des Schienenfahrzeugs oder des Verbands mehrerer Schienenfahrzeuge bei einem Bremsvorgang sequenziell angesteuert.

Unter einem Verband mehrerer Schienenfahrzeuge werden, wie bereits vorstehend beschrieben, mehrere miteinander gekoppelte Schienenfahrzeuge, d.h. ein aus Schienenfahrzeugen bestehender Zug, verstanden. Die Bremsen des Schienenfahrzeugs oder des Verbands mehrerer Schienenfahrzeuge werden dabei durch eine Bremssteuerungsvorrichtung angesteuert.

Im erfindungsgemäßen Verfahren werden die Bremsen voneinander verschiedener Achsen oder die Bremsen voneinander verschiedener Drehgestelle bei einem Bremsvorgang sequenziell, d.h. zeitlich hintereinander angesteuert. Dadurch erfolgt der Kraftaufbau bzw. auch der Kraftabbau an den Bremsen eines Schienenfahrzeugs oder eines gesamten Zuges nicht gleichzeitig und schlagartig, sondern durch die sequenzielle Ansteuerung der Bremsen verschiedener Achsen bzw. verschiedener Drehgestelle kontinuierlich bzw. nacheinander. Dadurch kann die Beschleunigungsänderung, d.h. der Ruck beim Einleiten eines Bremsvorganges und auch beim Lösen von Bremsen verringert werden.

Gemäß dem erfindungsgemäßen Verfahren werden Steuerungsvorgänge zum Steuern von Bremsen eines Schienenfahrzeugs oder von Bremsen eines Verbands mehrerer Schienenfahrzeuge mit einer Abtastzeit getaktet durchgeführt, und die sequenzielle Ansteuerung der mehreren Bremsen wird verteilt innerhalb der Abtastzeit durchgeführt.

Wie bereits vorstehend ausgeführt, arbeitet hierbei eine Bremssteuerungsvorrichtung getaktet in einer Abtastzeit, d.h. sie liest Sensorsignale zu bestimmten Abtastzeitpunkten ein, gibt Steuerungsbefehle zu bestimmten Abtastzeitpunkten aus und führt während eines Abtastintervalls, d.h. während der Zeit zwischen den Abtastzeitpunkten Berechnungsschritte durch. Die Steuerung erfolgt damit nicht kontinuierlich, sondern getaktet zu bestimmten Abtastzeiten bzw. innerhalb vorgegebener Abtastintervalle. Die Abtastzeit kann dabei variieren, ist vorzugsweise jedoch konstant.

In der vorteilhaften Ausgestaltung des erfindungsgemäßen Verfahrens wird die sequentielle Ansteuerung der Bremsen verteilt innerhalb der Abtastzeit durchgeführt. Damit werden während eines Abtastintervalles nacheinander sämtliche Bremsen des Schienenfahrzeugs oder des Verbands von Schienenfahrzeugen angesteuert. Zu den Abtastzeitpunkten erfolgt somit kein sprunghafter Aufbau und Abbau von Bremskräften, wie bei einer gleichzeitigen Ansteuerung der Bremsen, sondern ein während des Abtastintervalls gestufter Aufbau und/oder Abbau der Bremskräfte aufgrund der aufeinanderfolgenden Ansteuerung der Bremsen.

In einer weiteren vorteilhaften Ausgestaltung des erfindungsgemäßen Verfahrens werden beim Bremsvorgang eines Schienenfahrzeugs mit jeweils zwei in zwei Drehgestellen angeordneten Achsen die Bremsen der einzelnen Achsen derart angesteuert, dass sie in einem zeitlichen Abstand von einem Viertel der Abtastzeit zueinander versetzt angesteuert werden. Bei diesem Verfahren weist somit ein Schienenfahrzeug zwei Drehgestelle auf, in dem jeweils zwei Achsen angeordnet sind. Das Schienenfahrzeug verfügt damit über vier Achsen mitsamt zugehörigen Bremsen, die achsweise angesteuert werden können. Dabei werden sämtliche Achsen während der Abtastzeit bzw. innerhalb des Abtastintervalls, mit denen eine Bremssteuerungsvorrichtung arbeitet, angesteuert. Die Ansteuerung der einzelnen Achsen erfolgt dabei in gleichen zeitlichen Abständen verteilt über die Abtastzeit, so dass bei vier Achsen der zeitliche Abstand zwischen der Ansteuerung der Bremsen der einzelnen Achsen jeweils ein Viertel der Abtastzeit beträgt.

Ausführungsbeispiele der Erfindung werden nachfolgend anhand der beigefügten Zeichnungen beschrieben.

Es zeigen, größtenteils schematisch:
Fig. 1 ein Schienenfahrzeug mit zwei Drehgestellen und einer pneumatischen Bremse, die durch eine erfindungsgemäße Bremssteuerungsvorrichtung angesteuert wird,
Fig. 2 den Verlauf von Bremsdruck und Fahrzeugverzögerung in einer herkömmlichen, zentral angesteuerten pneumatischen Bremse,
Fig. 3 den Verlauf von Bremsdruck und Fahrzeugverzögerung in einer herkömmlichen pneumatischen Bremse, in denen der Bremsdruck in Abtastintervallen getaktet aufgebaut und sämtliche Bremszylinder gleichzeitig beaufschlagt werden,
Fig. 4 eine erfindungsgemäße Bremssteuerungsvorrichtung, bei der die Bremsventile sequenziell angesteuert werden,
Fig. 5 den Verlauf von Fahrzeugbeschleunigung und Druckaufbau in einer Bremse, in der die Bremsventile erfindungsgemäß sequenziell angesteuert werden.

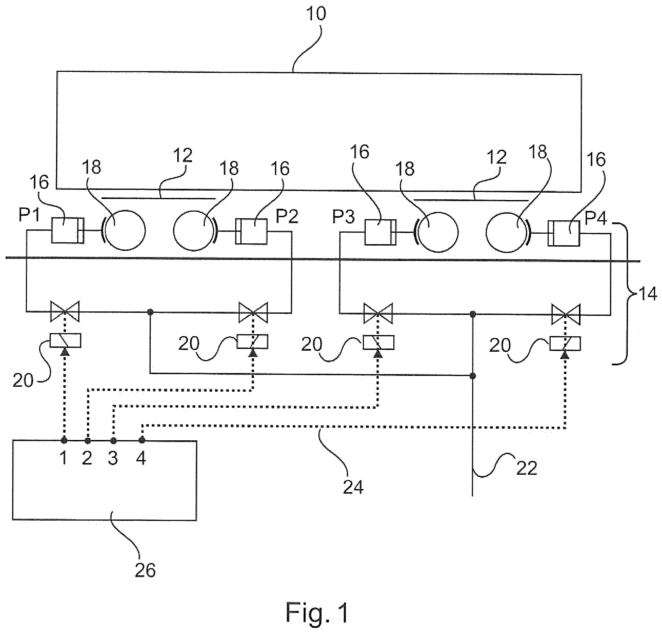

**Fig. 1** zeigt ein Schienenfahrzeug 10, das zwei Drehgestelle 12 aufweist. Jedes der beiden Drehgestelle 12 weist zwei Achsen 18 auf. Jede der Achsen 18 wird durch Bremsen 14 einzeln gebremst. Die Bremsen 14 sind in der Fig. 1 dargestellten Ausführung pneumatische Bremsen, bei denen die Bremskräfte durch Bremszylinder 16 erzeugt werden. Die Bremszylinder 16 werden jeweils durch den Bremszylindern 16 zugeordnete Bremsventile 20 angesteuert. Durch die Bremsventile 20 werden die Bremszylinder 16 aus einer Versorgungsleitung 22 beim Bremsvorgang mit Druck beaufschlagt und beim Lösen der Bremsen 14 entlüftet, wodurch ein Druckabbau in den Bremszylindern 16 vorgenommen wird. Die Bremsventile 20 werden durch Steuerleitungen 24 von einer Bremssteuerungsvorrichtung 26 angesteuert. Durch eine erfindungsgemäße Bremssteuerungsvorrichtung 26 kann jedoch auch eine andere als die in Fig. 1 dargestellte pneumatische Bremsvorrichtung 18 angesteuert werden, beispielsweise elektrische Bremsen, mit denen die einzelnen Achsen des Schienenfahrzeugs 10 abgebremst werden können. Die Funktion der erfindungsgemäßen Bremssteuerungsvorrichtung 26 wird jedoch nachfolgend am Beispiel einer pneumatischen Bremse 14 erläutert.

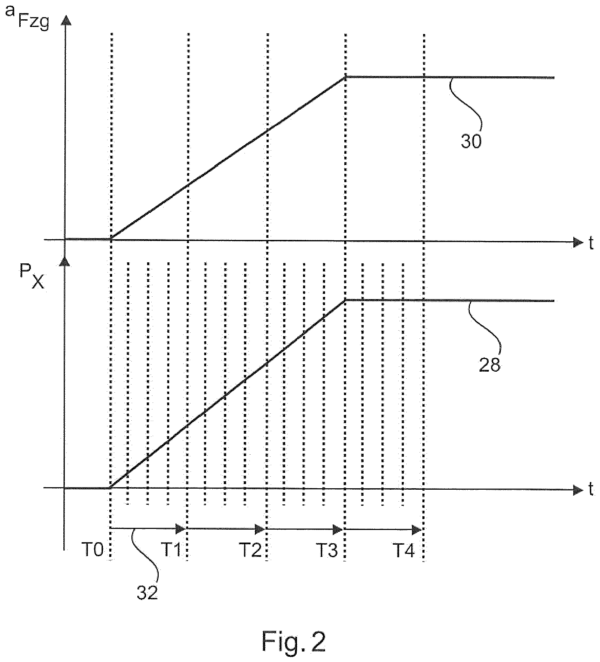

**Fig. 2** zeigt den Verlauf des Bremsdrucks Pₓ 28 sowie den Verlauf der Fahrzeugverzögerung a_{FZg} 30 in einem Schienenfahrzeug mit einer herkömmlichen pneumatischen Bremse, die zentral gesteuert wird, beispielsweise durch ein Führerbremsventil im Triebfahrzeug. Wird ein Führerbremsventil im Triebfahrzeug durch den Triebfahrzeugführer betätigt, so führt dies zu einem Druckabfall in der Hauptluftleitung. Steuerventile leiten dann die Druckluft aus Hilfsluftbehältern in die Bremszylinder, die darauf Bremsklötze an die Räder oder Bremsscheiben drücken bzw. die Bremszangen der Scheibenbremsen betätigen. Durch die Länge der Hauptluftleitung und die Entfernung zwischen dem Führerbremsventils und den Bremszylindern werden gegebenenfalls im Steuerdruck vorhandene Drucksprünge über den Übertragungsweg geglättet und kommen bei den Bremszylindern als Krafterzeuger nicht mehr an. Dadurch steigt der Druck Pₓ 28 in den einzelnen Bremszylindern 16 kontinuierlich an, selbst wenn eine Bremssteuerung lediglich in Abtastintervallen 32 getaktet das Bremssystem ansteuern sollte.

Dadurch entsteht eine kontinuierliche Verzögerung a_{FZg} 30 des Schienenfahrzeugs. Die Verzögerung a_{Fzg} 30 des Schienenfahrzeugs verändert sich dabei aufgrund des kontinuierlichen Druckaufbaus Pₓ 28 in den einzelnen Bremszylindern, und aufgrund der daraus resultierenden kontinuierlichen Zunahme der Bremskräfte, stetig, d.h. ohne Sprünge, und dies selbst dann, wenn die Bremssteuerung nicht kontinuierlich arbeitet, sondern in Abtastintervallen 32 getaktet eine Ansteuerung durchführt, da eine Glättung von eventuellen Drucksprüngen durch den Übertragungsweg von dem Führerbremsventil bis zu den Bremszylindern auftritt.

Dadurch wird während des Bremsvorgangs eine abgesehen von den Übergängen bei der Einleitung und der Beendigung des Druckaufbaus kontinuierliche Änderung der Fahrzeugverzögerung a_{Fzg} 30 erzielt.

Ein in Fig. 2 dargestellter kontinuierlicher Verlauf des Druckaufbaus 28 in den einzelnen Bremszylindern 16 einer pneumatischen Bremse 14 und ein daraus resultierender weitgehend kontinuierlicher Verzögerungsverlauf a_{Fzg} 30 kann auch in einem pneumatischen Bremssystem erzielt werden, das nicht zentral durch ein Führerbremsventil angesteuert wird, sondern bei dem eine achsweise bzw. drehgestellweise Ansteuerung der Bremszylinder 16 möglich ist, wie es in Fig. 1 dargestellt ist. Hierfür ist es jedoch erforderlich, die Kraftänderungsgeschwindigkeiten durch Bedüsen, beispielsweise der Bremsventile 20, auf ein Zeitverhalten einzustellen, welches einen akzeptablen gleichmäßigen Kraftaufbau bzw. Kraftabbau und damit einen akzeptablen Verzögerungsverlauf a_{Fzg} am Fahrzeug ermöglicht.

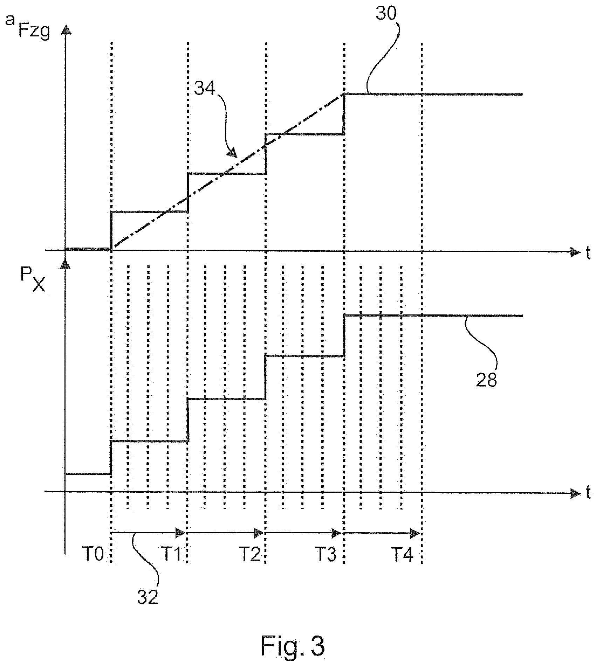

**Fig. 3** zeigt den Druckverlauf Pₓ 28 in den einzelnen Bremszylindern 16 sowie den Verlauf der Fahrzeugverzögerung a_{Fzg} 30 bei einer Bremssteuerung, die mit einem Abtastintervall 32 getaktet arbeitet, und wobei die Bremsventile 20, die die Bremszylinder 16 be- oder entlüften, jeweils im Abtastintervall 32 getaktet angesteuert werden. Dies führt zu einem stufenförmigen Bremsdruckverlauf Pₓ 28 in den einzelnen Bremszylindern, wobei jeweils zu Beginn eines Abtastintervalls 32 ein Drucksprung in den einzelnen Bremszylindern 16 auftritt. Dies führt wiederum zu einem druckförmigen Anstieg der Bremskräfte, da der plötzliche stufenförmige Druckanstieg in allen Bremszylindern 16 des Schienenfahrzeugs 10 gleichzeitig auftritt, und somit die Bremskräfte, die durch die Bremsen 14 auf die Achsen 18 ausgeübt werden, für alle Achsen 18 des Schienenfahrzeugs 10 gleichzeitig ansteigen. Hieraus resultiert eine sprungförmige Zunahme der Fahrzeugverzögerung a_{Fzg} 30 mit starken, sprungförmigen Änderungen der Fahrzeugverzögerung a_{Fzg} jeweils zu Beginn eines Abtastintervalls 32. An den Sprungstellen wird damit der auftretende Ruck unendlich groß. Der daraus resultierende sprungförmige bzw. stufenförmige Verlauf 30 der Fahrzeugverzögerung a_{FZg} weicht damit erheblich von einem idealen, kontinuierlich zunehmenden Verlauf 34 der Fahrzeugverzögerung ab, wie er beispielsweise in Fig. 2 durch eine zentrale Steuerung des Bremssystems oder durch Bedüsung des Bremssystems erzielt wird. Um die starken gleichzeitigen Änderungen Pₓ im Druckverlauf 28 und die daraus resultierenden Sprünge in der Fahrzeugverzögerung a_{Fzg} 30 zu vermeiden, ist somit eine entsprechende Bedüsung beispielsweise der Bremsventile 20 vorzusehen, durch die die Drucksprünge in den Bremszylindern 16 und dadurch die Sprünge in der Fahrzeugverzögerung a_{Fzg} geglättet werden können, um sie so weit wie möglich an den idealen Verlauf 34 der Fahrzeugverzögerung a_{Fzg} anpassen zu können.

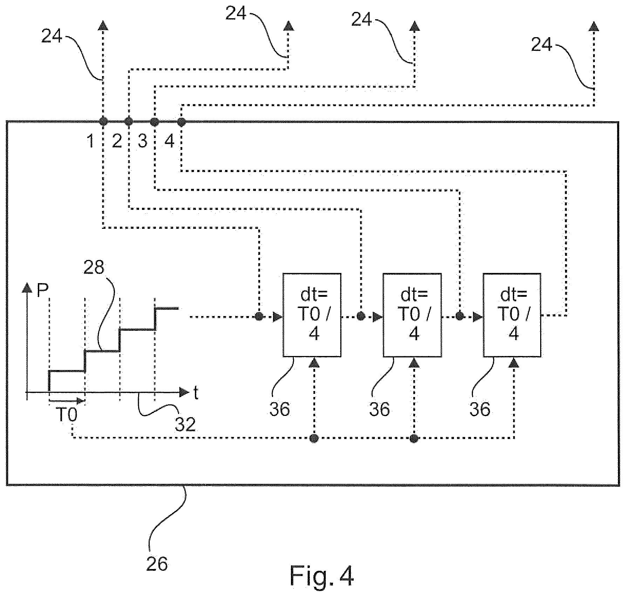

**Fig. 4** zeigt eine erfindungsgemäße Bremssteuerungsvorrichtung 26, bei der der Druckaufbau in den einzelnen Bremszylindern 16 sequenziell innerhalb eines Abtastintervalls 32 in einem zeitlichen Abstand von jeweils einem Viertel des Abtastintervalls 32 erfolgt. Die Bremssteuerungsvorrichtung 26 gibt dabei zunächst einen stufenförmigen Bremsdruckverlauf 28 vor, bei der eine stufenförmige Änderung des Bremsdrucks 28 jeweils zu Beginn eines Abtastintervalls 32 vorgegeben wird. Das daraus resultierende Steuersignal für die Bremsventile 20 der pneumatischen Bremse 14 wird jedoch für die einzelnen Bremsventile 20 zeitlich sequenziell gestaffelt, so dass die einzelnen Bremsventile 20 der jeweiligen Bremszylinder 16 nacheinander in einem zeitlichen Abstand voneinander angesteuert werden und der Druckaufbau in den Bremszylindern 16 der einzelnen Achsen 18 des Schienenfahrzeugs 10 nicht gleichzeitig, sondern nacheinander erfolgt.

Dafür weist die Bremssteuerung 26 Verzögerungsglieder 36 auf, die die Steuersignale für die Steuerleitungen 24 zum Ansteuern der Bremsventile 20 jeweils zeitlich verzögert, so dass zunächst das Bremsventil 20 eines Bremszylinders 16 einer Achse 18, danach das Bremsventil 20 für einen Bremszylinder 16 einer anderen Achse 18, danach das Bremsventil 20 für den Bremszylinder 16 einer weiteren Achse 18 sowie abschließend der Bremszylinder 16 der vierten Achse 18 des Schienenfahrzeugs 10 angesteuert wird. Dieses Prinzip lässt sich selbstverständlich auch auf zweiachsige Schienenfahrzeuge oder auf Verbände von Schienenfahrzeugen, d.h. auf Züge übertragen, in denen ebenfalls die Bremsen 14 der Achsen 18 des gesamten Zuges oder die Bremsen 14 der Drehgestelle 12 des gesamten Zuges sequenziell gestaffelt, d.h. hintereinander angesteuert werden können, um auch im gesamten Zugverband einen weitgehend kontinuierlichen Aufbau der Bremskräfte bzw. Abbau der Bremskräfte beim Lösen der Bremsen 14 zu erzielen.

In der in Fig. 4 dargestellten Ausführung der erfindungsgemäßen Bremssteuerungsvorrichtung 26 sind die Verzögerungsglieder 36 so gestaltet, dass nach dem Ansteuern eines Bremsventils 20 für eine Achse 18 des Schienenfahrzeugs 10 das Signal für das Ansteuern eines Bremsventils 20 für einen Bremszylinder 16 einer weiteren Achse 18 erst dann gegeben wird, wenn ein Viertel des Abtastintervalls 32 verstrichen ist. Dadurch ist es möglich, bei einem Schienenfahrzeug 10, bei einem Triebfahrzeug oder einem Personenwaggon, die vier Achsen 18 aufweisen, die beispielsweise in zwei Drehgestellen 12 angeordnet sein können, die Bremszylinder 16 der einzelnen Achsen 18 über ein Abtastintervall 32 gleichmäßig verteilt betätigen zu können, so dass über das Abtastintervall 32 ein möglichst gleichmäßiger Aufbau der Gesamtbremskräfte für das Schienenfahrzeug 10 auftritt, und damit die Sprünge in der Fahrzeugverzögerung, und damit der auftretende Ruck so weit wie möglich reduziert werden.

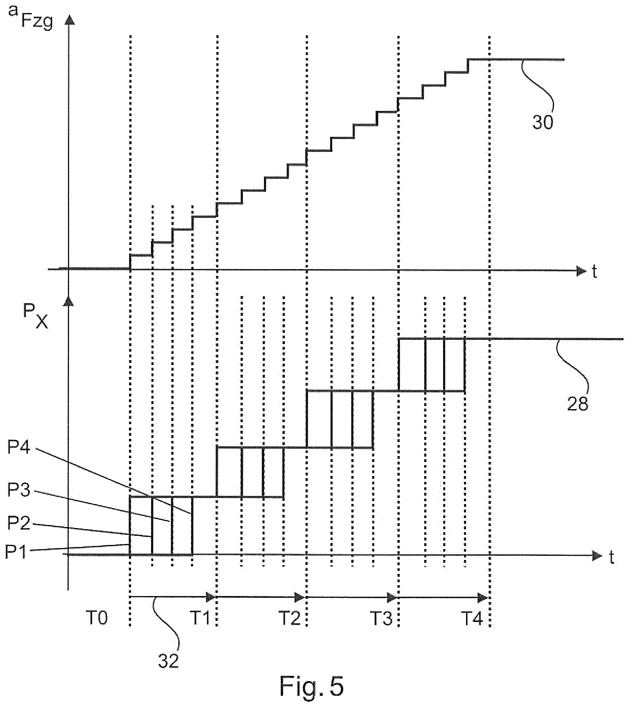

**Fig. 5** zeigt den Bremsdruckverlauf 28 sowie den Verlauf der Fahrzeugverzögerung a_{Fzg} 30, der bei einem Bremsvorgang mit der in Fig. 4 dargestellten erfindungsgemäßen Bremssteuerungsvorrichtung 26 erzielt wird. Es ist zu erkennen, dass die Druckanstiege P1, P2, P3 und P4 in den vier Bremszylindern 16 des in Fig. 1 dargestellten Schienenfahrzeugs 10 mit vier Achsen 18 nacheinander sowie in gleichen Abständen innerhalb des Abtastintervalls 32erfolgen. Dies wird bewirkt durch die jeweilige Verzögerung der Ansteuerung des Bremsventils 20 für einen jeweils nachfolgend anzusteuernden Bremszylinder 16 um jeweils ein Viertel der Abtastzeit 32 mittels der in Fig. 4 dargestellten Verzögerungsglieder 36.

Wie in Fig. 5 dargestellt, wird somit zunächst das Bremsventil 20 des ersten Bremszylinders 16, danach das Bremsventil 20 des zweiten Bremszylinders 16 etc. angesteuert, so dass der Druckaufbau in den einzelnen Bremszylindern 16 nacheinander erfolgt, wodurch auch die Bremskräfte nicht schlagartig zu Beginn eines Abtastintervalls 32, wie in Fig. 3 dargestellt, auftreten, sondern die resultierende Bremskraft am Schienenfahrzeug 10, die durch die den einzelnen Bremszylindern 16 zugeordneten Bremsen 14 erzeugt wird, in mit erheblich geringeren Sprüngen ansteigt, wenn jeweils ein weiterer Bremszylinder 16 betätigt wird. Daraus resultiert ein Verlauf 30 der Fahrzeugverzögerung a_{Fzg} für das Schienenfahrzeug 10, der erheblich geringere Sprünge aufweist als ein Verlauf der Fahrzeugverzögerung a_{Fzg} 30 bei einem Schienenfahrzeug, bei dem sämtliche Bremszylinder 16 jeweils zu Beginn eines Abtastintervalls 32 betätigt werden, wie in Fig. 3 dargestellt.

Der daraus resultierende nur gering gestufte Verlauf 30 der Fahrzeugverzögerung a_{Fzg} 30ist somit dem idealen, in Fig. 2 bzw. als Position 34 in Fig. 3 dargestellten Verlauf weitgehend angenähert. Der auftretende Ruck beim Bremsvorgang bzw. beim Lösen der Bremse weist damit deutlich geringere Sprünge auf als in dem in Fig. 3 dargestellten Verlauf. Es wird somit ein stetigerer Verzögerungsaufbau erzielt, der dem in Abbildung 2 dargestellten Verlauf, der im Stand der Technik entweder durch Glättung durch den Übertragungsweg bei einer zentralen Bremssteuerung, oder durch Bedüsung erzielt wird, annähert.

### BEZUGSZEICHENLISTE

- 10: Schienenfahrzeug
- 12: Drehgestell
- 14: Bremse
- 16: Bremszylinder
- 18: Achse
- 20: Bremsventil
- 22: Versorgungsleitung
- 24: Steuerleitung
- 26: Bremssteuerungsvorrichtung
- 28: Bremsdruckverlauf
- 30: Verlauf der Fahrzeugverzögerung
- 32: Abtastintervall bzw. Abtastzeit
- 34: idealer Verlauf der Fahrzeugverzögerung
- 36: Verzögerungsglied

## Patentansprüche

1. Bremssteuerungsvorrichtung (26) zur Steuerung von Bremsen (14) eines Schienenfahrzeugs (10) oder von Bremsen (14) eines Verbands mehrerer Schienenfahrzeuge (10), wobei
die Bremssteuerungsvorrichtung (26) so gestaltet ist, dass sie die Bremsen (14) des Schienenfahrzeugs (10) oder des Verbands mehrerer Schienenfahrzeuge (10) achsweise oder drehgestellweise ansteuern kann,
wobei
die Bremssteuerungsvorrichtung (26) so gestaltet ist, dass die Bremsen (14) voneinander verschiedener Achsen (18) oder die Bremsen (14) voneinander verschiedener Drehgestelle (12) bei einem Bremsvorgang sequentiell angesteuert werden,
**dadurch gekennzeichnet, dass** die Bremssteuerungsvorrichtung (26) so gestaltet ist, dass sie Steuerungsvorgänge mit einer Abtastzeit (32) getaktet durchführt und die sequentielle Ansteuerung der Bremsen (14) verteilt innerhalb der Abtastzeit (32) durchgeführt wird.

2. Bremssteuerungsvorrichtung (26) nach Anspruch 1,
wobei die Bremssteuerungsvorrichtung (26) so gestaltet ist, dass beim Bremsvorgang die Bremsen (14) eines Schienenfahrzeugs (10) mit jeweils zwei in zwei Drehgestellen (12) angeordneten Achsen (18) derart angesteuert werden, dass die Bremsen (14) der einzelnen Achsen (18) in einem zeitlichen Abstand von einem Viertel der Abtastzeit (32) zueinander versetzt angesteuert werden.

3. Bremssteuerungsvorrichtung (26) nach einem der vorangehenden Ansprüche, wobei die Bremssteuerungsvorrichtung (26) so gestaltet ist, dass Steuerventile (20) oder Vorsteuerventile einer pneumatischen Bremse (14) angesteuert werden können.

4. Verfahren zur Steuerung von Bremsen (14) eines Schienenfahrzeugs (10) oder von Bremsen (14) eines Verbands mehrerer Schienenfahrzeuge (10),
wobei
die Bremsen (14) voneinander verschiedener Achsen (18) oder die Bremsen (14) voneinander verschiedener Drehgestelle (12) bei einem Bremsvorgang sequentiell angesteuert werden,
**dadurch gekennzeichnet, dass** Steuerungsvorgänge mit einer Abtastzeit (32) getaktet durchführt werden und die sequentielle Ansteuerung der Bremsen (14) verteilt innerhalb der Abtastzeit (32) durchgeführt wird.

5. Verfahren nach Anspruch 4,
wobei beim Bremsvorgang eines Schienenfahrzeugs (10) mit jeweils zwei in zwei Drehgestellen (12) angeordneten Achsen (18) die Bremsen (14) der einzelnen Achsen (18) derart angesteuert werden, dass sie in einem zeitlichen Abstand von einem Viertel der Abtastzeit (32) zueinander versetzt angesteuert werden.

## Claims

1. Brake control device (26) for controlling the brakes (14) of a rail vehicle (10) or the brakes (14) of a combination of a plurality of rail vehicles (10), wherein
the brake control device (26) is designed such that it can actuate the brakes (14) of the rail vehicle (10) or of the combination of a plurality of rail vehicles (10) on an axle or on a bogie,
wherein
the brake control device (26) is designed such that during a braking process the brakes (14) of axles (18) different from one another or the brakes of bogies (12) different from one another can be actuated sequentially,
**characterised in that** the brake control device (26) is designed such that it carries out the control processes in a timed manner with a scanning time (32) and the sequential actuation of the brakes (14) is carried out in a distributed manner within the said scanning time (32).

2. Brake control device (26) according to Claim 1,
wherein the brake control device (26) is designed such that during the braking process the brakes of a rail vehicle (10) are actuated in each case with two axles (18) arranged on two bogies (12) in such manner that the brakes (14) of the individual axles (18) are actuated offset by a time interval apart from one another, which interval is a quarter of the scanning time (32).

3. Brake control device (26) according to either of the preceding claims,
wherein the brake control device (26) is designed such that control valves (20) or pilot control valves of a pneumatic brake (14) can be actuated.

4. Method for controlling the brakes (14) of a rail vehicle (10) or the brakes (14) of a combination of a plurality of rail vehicles (10),
wherein
during a braking process the brakes (14) of axles (18) different from one another or the brakes of bogies (12) different from one another are actuated sequentially,
**characterised in that** control processes are carried out in a timed manner with a scanning time (32) and the sequential actuation of the brakes (14) is carried out in a distributed manner within the said scanning time (32).

5. Method according to Claim 4,
wherein during the braking process of a rail vehicle (10) in each case with two axles (18) arranged in two bogies (12), the brakes (14) of the individual axles (18) are actuated in such manner that they are actuated offset by a time interval apart from one another, which interval is a quarter of the scanning time (32).

## Revendications

1. Dispositif (26) de commande de freins pour la commande de freins (14) d'un véhicule (10) ferroviaire ou de freins (14) d'une rame de plusieurs véhicules (10) ferroviaires, dans lequel
le dispositif (26) de commande de freins est conformé de manière à pouvoir commander, essieu par essieu ou boggie par boggie ; les freins du véhicule (10) ferroviaire ou de la rame de plusieurs véhicules (10) ferroviaires,
dans lequel
le dispositif (26) de commande de freins est conformé de manière à ce que les freins (14) d'essieux (18) différents les uns des autres, ou les freins (14) de boggies (12) différents les uns des autres, soient commandés séquentiellement lors d'une opération de freinage,
**caractérisé en ce que** le dispositif (26) de commande de freins est conformé de manière à effectuer en cadence avec un temps (32) d'échantillonnage les opérations de commande et on effectue la commande séquentielle des freins (14) d'une manière répartie dans le temps (32) d'échantillonnage.

2. Dispositif (26) de commande de freins suivant la revendication 1,
dans lequel le dispositif (26) de commande de freins est conformé de manière à commander, lors de l'opération de freinage, les freins (14) d'un véhicule (10) ferroviaire ayant respectivement deux essieux (18) montés dans deux boggies (12) de manière à commander de manière décalée les uns par rapport aux autres les freins (14) des divers essieux (18) avec une distance dans le temps d'un quart du temps (32) d'échantillonnage.

3. Dispositif (26) de commande de freins suivant l'une des revendications précédentes,
dans lequel le dispositif (26) de commande de freins est conformé de manière à pouvoir commander des soupapes (20) de commande ou des soupapes pilotes d'un freins (14) pneumatique.

4. Procédé de commande de freins d'un véhicule (10) ferroviaire ou de freins (14) d'une rame de plusieurs véhicules (10) ferroviaires,
dans lequel
on commande les freins (14) d'essieux (18) différents les uns des autres où les freins (14) de boggies (12) différents les uns des autres séquentiellement lors d'une opération de freinage,
**caractérisé en ce que** l'on effectue d'une manière cadencée avec un temps (32) d'échantillonnage les opérations de commande et l'on effectue la commande séquentielle des freins d'une manière répartie dans le temps (32) d'échantillonnage.

5. Procédé suivant la revendication 4,
dans lequel, lors de l'opération de freinage d'un véhicule (10) ferroviaire ayant respectivement deux essieux (18) montés dans deux boggies (12), on commande les freins (14) des divers essieux (18) de manière à les commander de manière décalée les uns par rapport aux autres d'un espace de temps d'un quart du temps (32) d'échantillonnage.
